# EUROPEAN PATENT SPECIFICATION

(11) **EP 3 058 774 B1**
(45) Date of publication and mention of the grant of the patent: **08.05.2019**
(21) Application number: 14854831.6
(22) Date of filing: 16.10.2014
(51) Int. Cl.: H04W 4/70, H04W 74/00, H04W 88/02

(54) **DATA TRANSMISSION FROM MOBILE RADIO COMMUNICATIONS DEVICE**
DATENÜBERTRAGUNG VON EINER MOBILFUNKKOMMUNIKATIONSVORRICHTUNG
TRANSMISSION DE DONNÉES À PARTIR D'UN DISPOSITIF DE RADIOCOMMUNICATIONS MOBILES

(30) Priority: 18.10.2013 GB 201318441
(43) Date of publication of application: 24.08.2016
(73) Proprietor: NEC Corporation, Tokyo 108-8001 (JP)
(72) Inventor: HANEJI, Hayato, Reading Berkshire RG2 0TD (GB); IANEV, Iskren, Reading Berkshire RG2 0TD (GB); LAIR, Yannick, Reading Berkshire RG2 0TD (GB)
(74) Representative: MacDougall, Alan John Shaw
(86) International application number: PCT/JP2014/005247
(87) International publication number: WO 2015/056447

(56) References cited:
- WO-A1-2011/151747
- WO-A1-2012/020338
- WO-A1-2012/020338

## Description

### Technical Field

The present invention relates to data transmission from a mobile radio communications device, such as those commonly referred to as User Equipment (UE) according to 3GPP (3rd Generation Partnership Project) specifications and scenarios, including devices involved in Machine Type Communication (MTC), requiring the transmission of small amounts of data, and commonly known as Small Data Transmission (SDT) features.

### Background Art

It is well known for example, that many MTC applications send or receive small amounts of data. Also there has been a large increase in smartphone use where many applications exchange 'keep-alive' messages with the network and seeking to keep network connections open. All this can lead to inefficient use of resources within 3GPP systems.

Indeed, the 3GPP Services and System Aspects (SA1) Working Group has identified SDT as a potentially important feature of MTC. According to section 7.2.5 of Technical Specification TS 22.368, the "MTC Feature SDT" is intended for use with MTC devices that send or receive small amounts of data and the system is required to support transmissions, either sending or receiving, of small amounts of data with minimal network impact (e.g. signalling overhead, network resources, delay for reallocation). Before transmission of small amount of data, the MTC Device may be attached or detached to/from the network and the system can also be arranged to count the number of small data transmissions per subscription such as for example for charging or statistical purposes.

The 3GPP SA2 Working Group has also considered SDT optimization (including in the context of keep-alive messages from smartphones) as part of the MTCe-SDDTE (Small Data transmission and Device Triggering Enhancements) Work Item, such as noted in section 5.1 in Technical Report TR 23.887. Here, it is noted that many MTC applications send or receive small amounts of data and which characteristic may lead to inefficient use of resources in the 3GPP system and so there is a corresponding device to improve efficiency. The exact amount that is considered to be small may differ between individual systems.

Further, this Work Item notes that, for SDT, it is assumed that data transfer can arise at any time required by the application. As above, before the transmission of the small data, the MTC device may be attached to, or detached from, the network.

In identifying "Efficient Small Data transmission" as a potentially important issue.

SA2 Working Group has proposed several solutions for the efficient use of SDT features and as clarified in the above mentioned Technical Report TR 23.887.

In general for SDT, a different data path from that normally used is proposed in order to reduce the network impact such as signalling overhead, network resources consumption and/or delay for reallocation etc.

It is generally arranged that this SDT feature is employed when particular criteria for the SDT are fulfilled. Examples of such criteria could be that the data to be transferred comprises just one IP (Internet Protocol) packet and, if it is necessary, an expected response is also one IP packet; or alternatively, that the data size is small. The observed size of many of the instances of data exchanges is on the order of 1K (1024) octets and as noted in the above technical specification TS 22.368 at section 7.2.5.

While the 3GPP SA2 Working Group has therefore sought to define and recommended solutions for SDT, there are still undecided issues related to how to control the use of SDT at both the UE and the network sides. For example, the following "Editor's Note" appears in Technical Report TR 23.887, at section 5.1.1.3.1.1 where it is reported that "How to ensure that the application correctly uses the Service Request procedure and does not abuse this 'Small Data' NAS (Non-Access Stratum) procedure is an open issue".

It is clear from this "Editor's Note" that 3GPP systems need to employ solutions for restriction and control of the Small Data Transmission use by the UE and Applications (Apps) on the UE.

Also, there is a Small Data Transmission related Liaison Statement (LS) R2-133033 (NPL 1) from 3GPP RAN 2 Working Group in which it is acknowledged that benefits can arise from differentiated treatment of SDT in certain conditions. However, RAN2 Working Group also notes that should the SDT feature and solution be defined, it would be important to ensure that only traffic matching SDT characteristics makes use of such a solution, since the use of the SDT feature with other traffic patterns would result in capacity and performance loss.

That is, RAN2 notes that the solutions could lead to noticeable performance improvements on both the radio and the S1-MME interfaces only in very specific use cases, specifically only when the following conditions are fulfilled. First, that the solution is used for the transmission of 'isolated' bursts of packets, which means that the transmission of a bursts of packets is followed by a relatively long inactivity period (e.g. at least one minute). If the inter-arrival time of the packet bursts is shorter, then this solution would offer worse capacity than legacy solutions as it is more efficient to keep the UEs in RRC (Radio Resource Control) connected mode. Secondly, that the packet burst is made of maximum 2 packets (in total, i.e. considering both UL (Uplink) and DL (Downlink) packets). If more packets are sent in a burst, the solution would again offer worse capacity than legacy solutions on both the radio and the Sl-MME interfaces (as this would require the set up / release of a RRC connection for each packet pair). Thirdly, that the packets are 'small' in size (e.g. in the order of hundreds of bytes) - (i.e. > 1Kbytes per UL/DL message) otherwise the gain over the radio interface would be lost. Although there would be a reduction in the number of messages on the Sl-MME interface, there would be an increase in the size of such S1 messages.

It is suggested in Technical Report TR 23.887 that one possible way to achieve SDT restriction and control is via a subscription requirement for SDT. In section s5.1.1.3.1.2 of this Technical Report there is the following expected impact on the Home Subscriber Server (HSS) from SDT deployment, i.e. "Possible subscription information to indicate if UE uses "small data" feature". It is also thought possible that network operators and MTC service providers might agree in the future the provision of SDT subscription services for some MTC services that match the traffic pattern for small data (and as defined and standardized by the 3GPP in the future or defined by the network operators themselves). One possible example that could qualify for SDT is utility (gas/electricity) meter reporting. Another example could be remote reporting in the health field (e-health). These examples are of course not exhaustive. In such an environment, a SDT capable UE (or MTC device) would likely exhibit multiple applications (each with a SDT subscription) and with an access to the Small Data Service that might be controlled/restricted by way of subscription.

WO 2012/020338 A1 discloses techniques for selectively barring access attempts based on network resource identifiers for serving core network nodes. A method is disclosed in which an access terminal determines whether access barring based on serving node identifiers is applicable to the access terminal. If so, the access terminal compares a broadcasted serving node identifier to an identifier for the serving core network node, and selectively suppresses access activity by the access terminal based on the comparison, e.g., if the serving core network node for the access terminal matches a broadcast node identifier.

### Citation List

### Non Patent Literature

NPL 1: 3GPP TSG RAN WG2 Meeting #83, R2-133033, "Reply LS on requesting further input on MTCe solution 5.1.2.3.1", 2013-08

### Technical Problem

However, the inventors of this application have found that such known means of seeking to maintain and control SDT functionality are disadvantageously limited.

The present invention seeks to provide for a mobile radio communications device and method of operation, having advantages over known such devices and methods when considering the adoption of a SDT feature, and also to related network devices, and related methods of operation and overall networks systems and methods of operation.

### Summary of Invention

The invention is defined by devices according to claims 1 and 8 and methods according to claims 7 and 9. Further embodiments are defined by the dependent claims.

Also disclosed is a mobile radio communications device for communication within a mobile radio communications network, the mobile radio communications device being arranged for operating at least one application requiring network access for data transmission, and network access including a Small Data Transmission feature, the mobile radio communications device further being arranged to receive, as part of a procedure for attaching the mobile radio communications device to the mobile radio communications network, reference application information and to determine, based on the received reference application information, if an application seeking network access can employ the Small Data Transmission feature for its data transmission.

The invention can prove particularly advantageous in offering an improved control/ restriction of the adoption of SDT features as compared with that currently known and, in particular, that rely on subscription services/information. In particular, it can found that the network can have an improved mechanism to deter or control the User Equipment for use of an SDT feature.

Advantageously, the device can be arranged to determine if the data transmission meets Small Data Transmission criteria. In particular, such determination can be achieved at the application layer, or a lower layer, such as protocol stack, within the device.

In one aspect, the Application information allows identification of those Applications that can employ the Small Data Transmission feature. In particular, such application information can be provided in the form of an SDT Allowed Applications List.

Alternatively, the said Application information can be provided so as to identify those Applications that are barred from using the Small Data Transmission feature and, as such, can be provided in the form of a SDT Barred Application List.

The device can further be arranged such that, if by reference to the Application information it is determined that the Small Data Transmission feature cannot be employed, then a fall-back packet transmission procedure is employed.

As a further feature, the device can be arranged to receive the Application information from the radio communications network.

In particular the Application information can be delivered by way of Home Subscriber Server (HSS) and, if required, as subscriber information. As another example, the Application information can be delivered during any NAS procedures such as an Attach/Tracking Area Update (TAU)/Routing Area Update (RAU) procedure.

Also, if required, the Application information can be delivered by way of a provisioning mechanism, such as Open Mobile Alliance Device Management OMA DM or Universal Subscriber Identity Module - Over the Air (USIM OTA) mechanisms.

Yet further, the device can be arranged to determine within its application layer if an Application seeking network access can employ the Small Data Transmission feature.

Alternatively, the device can be arranged to determine in its protocol stack if the Application seeking network access can employ the Small Data Transmission feature.

In one particular example, the said Application information can comprise an Application identifiers.

It should be appreciated that said at least one Application can comprise an Application derived internally of the device, e.g. on the UE device. Alternatively, the said at least one Application can comprise an Application derived externally of the device and so which effectively employs the UE as a modem type device, for example for Applications from sensors or devices external to the UE and connected for example by AT commands, Bluetooth or any other appropriate interface technology.

Also disclosed is a method of operation within a mobile radio communications device for communication within a mobile radio communications network, the mobile radio communications device being arranged for operating at least one application requiring network access for data transmission and the network access including a Small Data Transmission feature, the method including receiving, as part of a procedure for attaching the mobile radio communications device to the mobile radio communications network, reference application information and determining, based on the received reference application information if an application seeking network access can employ the Small Data Transmission feature for its data transmission.

The method can further include the step of determining if the required transmission meets small data transmission criteria. Such determining step can be conducted within the application layer, or at a lower layer of the mobile radio communications device such as its protocol stack.

The method can further include presenting the reference Application information as an identification of those applications that are allowed access to a small data transmission feature, such as by means of an SDT Allowed Applications List, or applications that are not allowed access to a small data transmission feature, such as a SDT Barred Applications List.

The operational method within the mobile radio communications device can include the packet transmission of the application data by way of a fall-back procedure if it is determined that the required transmission does not meet the Small Data Transmission requirements, or if it is determined that the application is not identified as one that is permitted access to the Small Data Transmission feature.

The method further includes receiving the reference Application information from the network.

As noted above, the said reference Application information can be received by way of HSS as subscription information, or delivered during any NAS procedures such as an Attach/TAU/RAU procedure.

Also, the method can include receipt of the reference Application information by way of a provision mechanism such as OMA DM or USIM OTA mechanisms.

Preferably, the step of determining whether or not the application is barred or allowed, is advantageously conducted in the application layer. Alternatively, such determination can also be conducted within the lower layers of the device, such as in the protocol stack.

As appreciated from the above, the said reference Application information can comprise application identifiers.

Also disclosed is a mobile radio communications network device arranged for communication with a mobile radio communications device, the mobile radio communications network device operating within a mobile radio communications network and being arranged for operation with at least one application requiring network access for data transmission, the network access including a Small Data Transmission feature, the mobile radio communications network device further being arranged to deliver, as part of a procedure for attaching the mobile radio communications device to the mobile radio communications network, reference application information to the mobile radio communications device for determining if an application seeking network access can employ the Small Data Transmission feature for its data transmission.

The reference application information can advantageously comprise an indication of those applications that are allowed access to the Small Data Transmission feature or, alternatively, an indication of those applications that are not allowed access to a Small Data Transmission feature.

As such, the reference Application information can be presented to the mobile radio communications device as an Allowed Applications List, or a Barred Applications List.

The mobile radio communications network device is further arranged to deliver the Application information by way of a HSS as, for example, subscription information.

As a further option the Application Information can be delivered during any NAS procedures such as an Attach/TAU/RAU procedure or by way of a provisioning mechanism such as a OMA DM or USIM OTA mechanism.

It should be appreciated that the mobile radio communications network device can comprise any appropriate network device such as, for example an HSS, MME, or eNodeB (evolved Node B) all of which can be arranged, in series combination, to deliver this information to the mobile radio communications device.

Also disclosed is a method of operation within a mobile radio communications network device arranged to communicate with a mobile radio communications device within a mobile radio communications network, the mobile radio communications device being arranged for operating at least one application requiring network access for data transmission, the network access including a Small Data Transmission feature, the method including delivering, as part of a procedure for attaching the mobile radio communications device to the mobile radio communications network, reference application information to the mobile radio communications device for determining if the application seeking network access can employ the Small Data Transmission feature for its data transmission.

The method can include the step of delivering reference Application information comprising an indication of those applications that are allowed access to the Small Data Transmission feature or, alternatively, providing an indication of those applications that are barred from employing the Small Data Transmission feature.

The delivery of the said reference Application information can be achieved by way of a HSS such as, by way of subscription information, or can be delivered during any NAS procedures such as an Attach/TAU/RAU procedure.

A further alternative of this step is to provide the Application information by way of a provisioning mechanism such as OMA DM or USIM OTA mechanisms.

It will of course be appreciated that the present invention can also provide for a communications system employing a mobile radio communication device and a mobile radio communications network device as outlined above.

Also, the invention can provide for a method of operating a mobile radio communications network, including steps of operating a mobile radio communications device, and a mobile radio communications network device, as outlined above.

To summarise therefore, it should be appreciated that the present invention advantageously allows for the network to control, in the UE, the applications which can or cannot use the SDT features. This control can be achieved by reference to a SDT feature allowed applications list (SDT Allowed App List) or a SDT feature barred application list (SDT Barred App List).

The SDT feature can be used for the application data transfer when the application which starts the IP packet transfer is listed in the SDT Allowed App List. Otherwise the SDT feature cannot be used.

Or alternatively the SDT feature cannot be used for the application data transfer when the application which starts the IP packet transfer is listed in the SDT Barred App List.

The list shall be advantageously controlled from the network side. As noted above, it could be provisioned in HSS as subscription information.

Alternatively, the list can be delivered from network to the UE, for example during any NAS procedures such as an Attach/ TAU/ RAU procedure, or using provisioning mechanisms such as OMA DM or USIM OTA.

The list can then be stored in the UE so as to be held therein and used to decide whether or not that the use of the SDT feature is allowed for a particular application. Applications in the list can advantageously be specified by way of Application Identifiers. Any format can be defined for this purpose. For example, a similar format used by an Application port ID which is standardized by IANA (Internet Assigned Number Authority).

### Advantageous Effects of Invention

According to the present invention, it is possible to for example, provide for a mobile radio communications device and method of operation, having advantages over known such devices and methods when considering the adoption of a SDT feature, and also to related network devices, and related methods of operation and overall networks systems and methods of operation.

### Brief Description of Drawings

Fig. 1 comprises a signalling diagram illustrating signalling and connectivity in a mobile radio communications device and network devices during an attach procedure and so as to illustrate the incorporation of signalling and data transmission according to an exemplary embodiment of the present invention.
Fig. 2 comprises a schematic signalling diagram between a mobile radio communications device and a network device and including messaging within the mobile radio communications device according to one exemplary aspect of the present invention.
Fig. 3 comprises a schematic signalling diagram between a mobile radio communications device and a network device and including messaging within the mobile radio communications device according to another exemplary embodiment of the present invention.
Fig. 4 comprises a schematic signalling diagram between a mobile radio communications device and a network device and including messaging within the mobile radio communications device according to a yet further exemplary embodiment of the present invention.
Fig. 5 comprises a schematic signalling diagram between a mobile radio communications device and a network device and including messaging within the mobile radio communications device according to a still further exemplary embodiment of the present invention.
Fig. 6 comprises schematic representation of a mobile radio communications device ranged for operation according to an exemplary embodiment of the present invention.
Fig. 7 comprises a schematic representation of a mobile radio communications network device arranged for operation in accordance with an exemplary embodiment of the present invention.

### Description of Embodiments

Exemplary embodiments of the invention will be described further hereinafter, by way of example only, reference to the accompanying drawings.

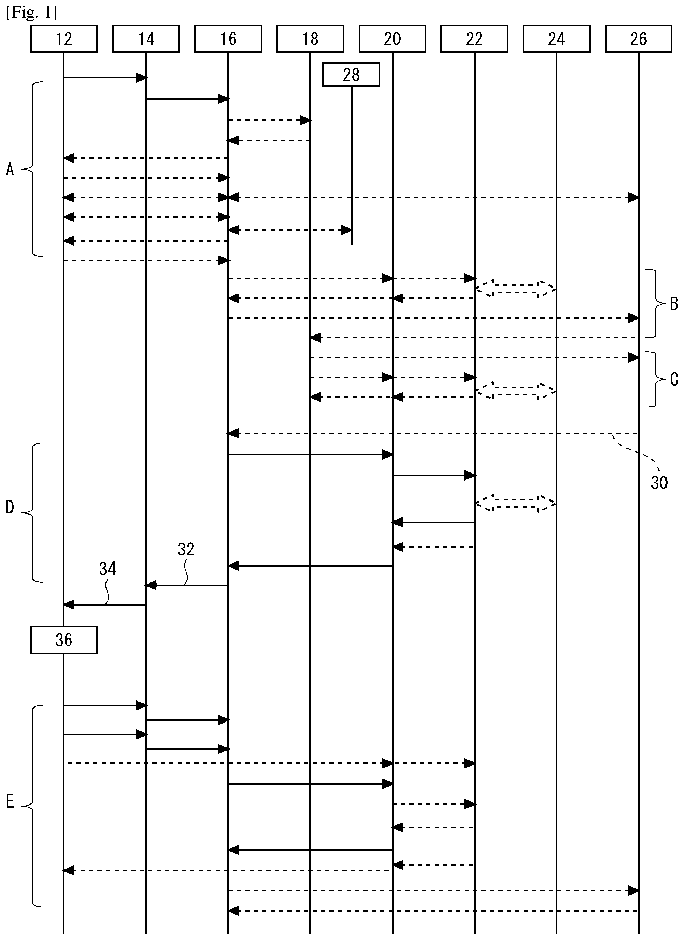

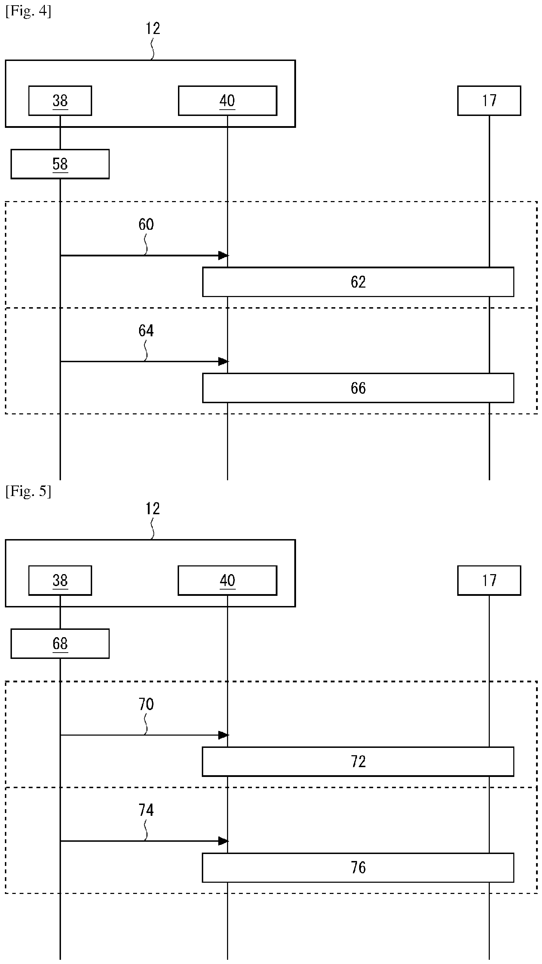

In Fig. 1, there is provided a signalling diagram based on Figure 5.3.2.1-1 known from 3GPP Technical Specification document TS 23.401 and concerning a "Network Attach" for a mobile radio communications device such as a UE arranged to register with the network to receive services that require such registration.

Such registration is described as Network Attachment and the "always-on" IP connectivity for UE/users of the Evolved Packed System (EPS) is enabled by establishing a default EPS bearer during Network Attachment. The Policy and Charging Control (PCC) rules applied to the default EPS bearer may be predefined in the Packet Data Network Gateway (PDN GW) and activated in the attachment by the PDN GW itself. The Attach procedure may trigger one or multiple dedicated bearer establishment procedures to establish dedicated EPS bearer(s) for that UE. During the attach procedure, the UE may request for an IP address allocation. Terminals utilising only IETF (Internet Engineering Task Force) based mechanisms for IP address allocation are also supported.

During the Initial Attach procedure, the Mobile Equipment Identity (MEI) is obtained from the UE. The Mobile Management Entity (MME) operator may check the MEI with an Equipment Identity Register (EIR). The MME passes the ME Identity (IMEISV) to the HSS and to the PDN GW. Also, if the MME supports SRVCC (Single Radio Voice Call Continuity), the MME can inform the HSS with the UE SRVCC capability e.g. for further IMS registration.

The E-UTRAN (Evolved Universal Terrestrial Radio Access Network) Initial Attach procedure is used for Emergency Attach by UEs that need to perform emergency services but cannot gain normal services from the network. These UEs are in limited service state as defined in Technical Specification TS 23.122. Also UEs that had attached for normal services and do not have emergency bearers established and are camped on a cell in limited service state (e.g. restricted Tracking Area or not allowed CSG (Closed Subscriber Group)) shall initiate the Attach procedures indicating that the attach is to receive emergency services. UEs that camp normally on a cell, i.e. UEs that are not in limited service state, should initiate normal initial attach when not already attached and shall initiate the UE Requested PDN Connectivity procedure to receive emergency EPS bearer services.

Turning now to the detail of Fig. 1, the actual signalling as arising as between a UE 12, eNodeB 14, MME 16, MME/Serving GPRS (General Packet Radio Service) Support Node SGSN 18, Serving GW 20, PDN GW 22, Policy and Charging Rules Function (PCRF) 24, HSS 26 and EIR 28 is illustrated and those aspects not directly relevant to the present invention can be summarised as follows.

As noted, the signalling relates to an Attach procedure during the initial stages A of which a mobile equipment identify is obtained from the UE 12 and which can be checked by way of the EIR 28.

The session request/response/termination signalling B and C arises prior to delivery of an update location acknowledgement signal 30 from the HSS 24 to the MME 16 in accordance with an embodiment of the present invention, it is at the time of this signal that the network first commences delivery of reference Application information seeking to identify those Applications (Apps) which are to be allowed access to a Small Data Transmission feature. In this particular embodiment, such reference Application information comprises a Small Data Transmission Allowed or Small Data Transmission Barred, App list.

Signalling relating to the session request/response arises as shown D between the MME 16 and the Serving GW 20 and subsequent to this, an initial context setup request signal 32 which contains the Attach Accept message is delivered from the MME 16 to the eNodeB 14 of the network. This Attach Accept message then provides for onward delivery of the Small Data Transmission Allowed or Small Data Transmission Barred Apps list previously received at the MME 16 from the HSS 26.

To complete the delivery process to the UE 12, an RRC connection reconfiguration signal 32 which contains the Attach Accept message is delivered from the eNodeB 14 to the UE 12 provided as part of the Attach accept procedure as known from the above mentioned tactical specification TS 23.401. However, in this aspect of the invention, the Attach Accept message in the signal 32 contains a Small Data Transmission Allowed or Small Data Transmission Barred App list as previously received from the MME 16.

The UE 12 then stores 36 the received allowed/barred list for the control of Apps therein and which might be seeking use of the Small Data Transmission feature.

For completeness, concluding signalling E is shown and which comprises RRC connection reconfiguration complete, and attach complete signalling prior to the provision of first uplink data, any required modified bearer requests/responses and also first downlink data.

The manner in which the UE 12 employs the reference Application information, comprising for example, either the SDT Allowed App List or SDT Barred App List can vary as required and various examples are discussed further hereinafter.

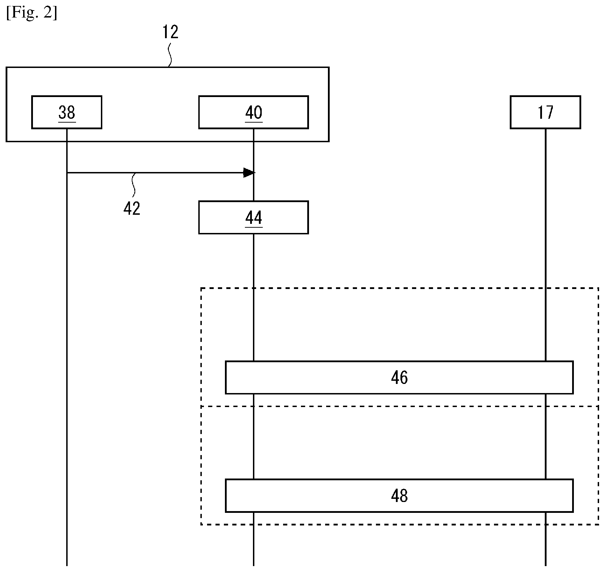

Turning now to Fig. 2, there is provided a schematic representation of signalling arising both within the UE 12, and to a network device 17 illustrated in this example as the eNodeB 14 and MME 16 of Fig. 1.

Within the UE 12 there is illustrated its application layer 38 and the protocol stack 40 and the procedure commences with a particular App requesting, by way of signal 42, to the protocol stack 40 as is currently known, IP packet transmission.

In this illustrated example, the protocol stack 40 is arranged to check 44 first whether or not the required transmission fulfils the Small Data Transmission criteria, for example due to its size, and secondly whether or not the App is included within a Small Data Transmission Allowed App List held in the UE 12 and as previous received from the network device 16.

It is then determined within the protocol stack 40 that the App can employ the Small Data Transmission feature if the IP packet concerned not only fulfils the small data transmission criteria, but that the App itself is identified as one appearing in the Small Data Transmission Allowed App List. If both requirements are not fulfilled the protocol stack can be arranged to determine that a fall-back, i.e. usual, packet transmission procedure be employed for the Apps transmission requirements.

That is, when the protocol stack decides that the SDT can be employed, it is determined at 46 that use can be made of the small data transmission procedure such as that proposed in Technical Report TR 23.887 s5.1.1.

If it is determined at the protocol stack that the Small Data Transmission feature cannot be employed 48, then a standard normal packet transmission procedure is employed as outline above.

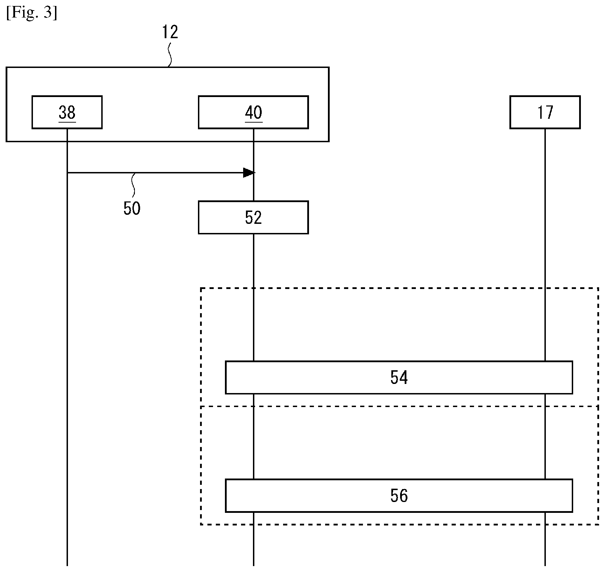

As an alternative, rather than employing a Small Data Transmission Allowed App List, the invention can provide for the delivery and storage of a Small Data Transmission Barred App List and its adoption within the protocol stack as illustrated with reference to Fig. 3. Of course, in this case, appearance of the particular App within the Barred App List, will prevent it achieving network access by way of the small data transmission feature.

With particular reference therefore to Fig. 3, there is provided a schematic illustration of signalling arising within, and from, a UE 12 such as that illustrated in Fig. 1, and in relation to a network device 17 again such as an eNodeB 14 and MME 16 as illustrated in Fig. 1.

As with the embodiment of Fig. 2, and in accordance with existing data transfer request, any particular application within the application layer 38 of the UE12 can send a data transfer request 50 to the protocol stack 40 seeking transmission of the relevant IP packet.

Within the protocol stack 40, it is determined 52 how uplink data from the application 38 should be handled. Thus, it is first determined whether or not the App requiring transmission as identified in the application layer 38 fulfils the small data transmission criteria, and secondly, whether or not the particular application identified is included within the Small Data Transmission Barred App List as stored in the UE 12 and as previously received from the network.

If, within the protocol stack 40, it is determined 54 that the IP packet fulfils the Small Data Transmission criteria and does not appear in the Small Data Transmission Barred App List, then the small data transmission procedure, such as that of technical report TR 23.887 s5.1.1 can be employed or transmission of the IP packet to the network device 17.

However, if it is either determined that the IP packet does not fulfil the Small Data Transmission criteria, or it is determined that the App appears in the Small Data Transmission Barred App List, adoption of the Small Data Transmission feature will not be allowed and transmission of the IP packet is only allowed by way of a normal/ standard packet transmission procedure 56.

As an alternative to having the determination concerning possible use of a Small Data Transmission feature made within the protocol stack, it is also possible that such determination be made elsewhere within the device such as in the application layer 38 as illustrated further in, and discussed with reference to, Figs. 4 and 5.

Turning first to Fig. 4, there is illustrated an embodiment in which the determination of the availability of the small data transmission feature to a particular application is made in the application layer 38 and by reference to a Small Data Transmission Allowed App List in the UE 12 and as previously delivered from the network.

Also, the initial determination 58 as to how the required uplink data should be handled is made within the application layer 38 where it is first determined whether or not the IP packet fulfils the Small Data Transmission criteria and whether it appears in the Small Data Transmission Allowed App List.

If both requirements are fulfilled, a small data transfer request 60 is delivered from the application layer 38 to the protocol stack 40 such that onward data transmission to the network 62 can continue in accordance with a small data transmission procedure such as that known from TR 23.887 s5.1.1.

Alternatively, if it is determined that the IP packet does not fulfil the small data transmission criteria, or the application is not in the SDT Allowed App List, then a default/normal data transfer request 64 is delivered from the application layer 38 to the protocol stack 40 so as to allow for a normal packet transmission procedure 66 between the UE 12 and the network device 17 again such as an eNodeB 14 and MME 16 of Fig.1.

Referring now to Fig. 5, this example is similar to Fig. 4 insofar as the determination of the suitability of the IP packet for transmission to the network by way of a small data transmission procedure as determined in the application layer 38 of the UE 12. However, in this instance, such determination is made by reference to a small data transmission Barred App List, i.e. an indication of applications by way of reference Application information that should not be allowed access to the small data transmission feature.

There is again illustrated signalling within the UE 12, and between a UE 12 and the network device 17 such as an eNodeB 14 and MME 16 of Fig.1 and in the application layer 38 determination is made 68 as to how the uplink data should be handled.

If, within the application layer 38, it is determined that the IP packet seeking network access by the App fulfils the small data transmission criteria, again due for example to size and/or structure, and does not appear in the small data transmission Barred App List, a small data transfer request 70 for that IP packet is delivered from the application layer 38 to the protocol stack 40 for the onward transmission of the data to the network device 17 by way of a Small Data Transmission procedure 72 for example according to TR 23.887 s5.1.1.

However, if the IP packet from the application layer 38 does not fulfil the small data transmission criteria or the application appears in the small data transmission Barred App List, then a default/normal data transfer request for the IP packet 74 is delivered from the application layer 38 to the protocol stack 40. The application data is then transmitted from the UE 12 by way of a default/normal packet transmission procedure 76.

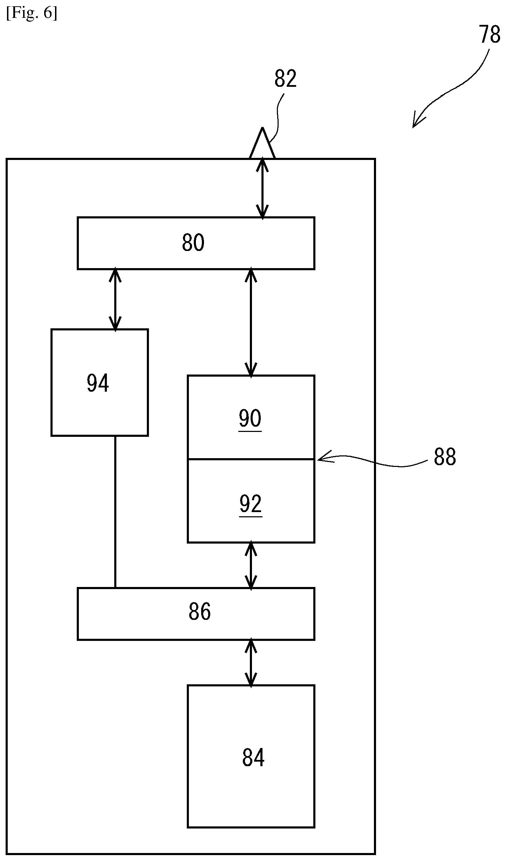

Turning now to Fig. 6, there is provided a schematic illustration of a mobile radio communications device such as a UE 78 arranged for operation in accordance with one aspect of the present invention and so as to provide for efficient control of access to, and use of, a Small Data Transmission feature for data transmissions to a network device.

The UE 78 includes standard transmission/reception functionality circuitry 80 operatively to connect to an antenna arrangement 82 and also an interface device 84 for allowing user interface with the UE 78.

The UE 78 includes a controller 86 for controlling various aspects of functionality of the UE 78 in accordance with a standard layered configuration 88 of which the application 90 and lower layer such as protocol stack 92 are illustrated. The UE 78 also includes memory functionality 94 which, in accordance with the present invention, can be employed to store either or both, of a small data transmission Allowed App List, or a small data transmission Barred App List. These lists are employed as required either within the application layer 90 or protocol stack 92 to determine whether or not a particular application requiring network access should be allowed to employ a Small Data Transmission feature as discussed hereinbefore.

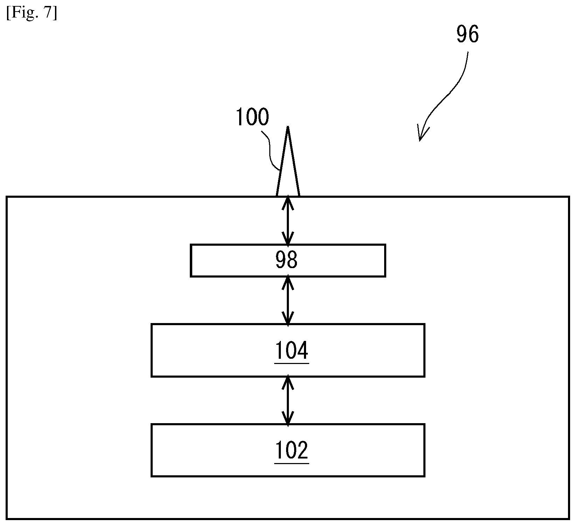

With regard to Fig. 7, there is provided a similar schematic diagram of a network device comprising an MME 96, such as that 16 of Fig. 1, and having transmission/ reception circuitry 98 operatively connected to an interface arrangement 100 and including control functionality 102 and an App List processor 104.

In this illustrated example, the App List processor 104 is arranged to include the allowed/barred App list in the Attach/TAU/RAU accept message to be composed by the MME 96 for onward delivery to the eNodeB which serves as a relay device for onward delivery of the allowed/barred App list within RRC connection reconfiguration signalling to a UE such as the UE 78 illustrated with reference to Fig. 6.

Although the network device illustrated is functionally described as a MME, the device could readily comprise a combined network node including both MME and eNodeB functionality with the App List processor 104 provided within the MME part of the network device, and the eNodeB part again simply conveying the Attach/TAU/RAU accept message to the UE as a relay and without awareness of the App list.

In each case, the List processor seeks to incorporate the Allowed App List or the Barred App List into network signalling, such as the signalling arising as part of an Attach Procedure, for eventual delivery to, and storage in, the UE device.

### Reference Signs List

- 12, 78: UE
- 14: eNodeB
- 16, 96: MME
- 17: NETWORK DEVICE
- 18: MME/SGSN
- 20: Serving GW
- 22: PDN GW
- 24: PCRF
- 26: HSS
- 28: EIR
- 38, 90: APPLICATION LAYER
- 40, 92: PROTOCOL STACK
- 80: TRANSMISSION/RECEPTION FUNCTIONALITY CIRCUITRY
- 82: ANTENNA ARRANGEMENT
- 84: INTERFACE DEVICE
- 86: CONTROLLER
- 88: STANDARD LAYERED CONFIGURATION
- 94: MEMORY FUNCTIONALITY
- 98: TRANSMISSION/RECEPTION CIRCUITRY
- 100: INTERFACE ARRANGEMENT
- 102: CONTROL FUNCTIONALITY
- 104: App List PROCESSOR

## Claims

1. A mobile radio communications device (12) for communication within a mobile radio communications network, the mobile radio communications network comprising an evolved Node B (14), the device (12) being arranged for operating at least one application requiring network access for data transmission and the network access including a Small Data Transmission, SDT, feature, the mobile radio communications device (12) further being arranged to:
receive, from the evolved Node B (14), a Radio Resource Control, RRC, connection reconfiguration signal (32) comprising an Attach Accept message, wherein the Attach Accept message comprises reference application information, and wherein the reference application information comprises a SDT allowed application list or a SDT barred application list;
determine, by means of the reference application information, whether a first application stored in the device (12) and seeking use of the SDT feature can employ the Small Data Transmission feature for its data transmission; and
use, upon determining that the first application can employ the SDT feature, the SDT feature for transmitting data of the first application to the evolved Node B (14).

2. The mobile radio communications device (12) as claimed in Claim 1 and arranged to determine if the data transmission meets Small Data Transmission criteria.

3. The mobile radio communications device (12) as claimed in Claim 2 and arranged such that it is determined in an application layer, or in a protocol stack of the device if the required transmission meets Small Data Transmission criteria.

4. The mobile radio communications device (12) as claimed in any one of Claims 1 to 3, wherein the reference application information allows identification of those applications that can employ the Small Data Transmission feature.

5. The mobile radio communications device (12) as claimed in any one of Claims 1 to 4, wherein the reference application information allows identification of those applications that are barred from using the Small Data Transmission feature.

6. The mobile radio communications device (12) as claimed in any one of Claims 1 to 5, and arranged such that if, by reference to the reference application information, it is determined that the Small Data Transmission feature cannot be employed, then a fall-back packet transmission procedure is employed.

7. A method performed by a mobile radio communications device (12) for communication within a mobile radio communications network, the mobile radio communications network comprising an evolved Node B (14), the device (12) being arranged for operating at least one application requiring network access for data transmission and the network access including a Small Data Transmission, SDT, feature, the method comprising the steps of:
receiving (32), from the evolved Node B (14), a Radio Resource Control, RRC, connection reconfiguration signal (32) comprising an Attach Accept message, wherein the Attach Accept message comprises reference application information, and wherein the reference application information comprises a SDT allowed application list or a SDT barred application list;
determining, by means of the received reference application information, whether a first application stored in the device (12) and seeking use of the SDT feature can employ the Small Data Transmission feature for its data transmission; and
using, upon determining that the first application can employ the SDT feature, the SDT feature for transmitting data of the first application to the evolved Node B (14).

8. A first mobile radio communications network device arranged for communication with a second mobile radio communications device (12), said first device being an evolved Node B (14), the second device (12) operating within a mobile radio communications network and being arranged for operating at least one application requiring network access for data transmission, the network access including a Small Data Transmission, SDT, feature, the mobile radio communications network device (14) further being arranged to;
receive, from a Mobility Management Entity (16), MME, a context setup request comprising an Attach Accept message, wherein the Attach Accept message comprises reference application information by means of which said second device (12) can determine if an application seeking network access can employ the Small Data Transmission feature for its data transmission, and wherein the reference application information comprises a SDT allowed application list or a SDT barred application list; and
deliver, to the second device (12), a Radio Resource Control, RRC, connection reconfiguration signal (32) comprising the Attach Accept message.

9. A method performed by a first mobile radio communications network device arranged to communicate with a second mobile radio communications device (12), said first device being an evolved Node B (14), said second device (12) operating within a mobile radio communications network and being arranged for operating at least one application requiring network access for data transmission, such network access including a Small Data Transmission, SDT. feature, the method comprising the steps of:
receiving, from a Mobility Management Entity (16), MME, a context setup request comprising an Attach Accept message, wherein the Attach Accept message comprises reference application information by means of which said second device (12) can determine if an application seeking network access can employ the Small Data Transmission feature for its data transmission, and wherein the reference application information comprises a SDT allowed application list or a SDT barred application list; and
delivering, to the second device (12), a Radio Resource Control, RRC, connection reconfiguration signal (32) comprising the Attach Accept message.

10. A communications system comprising a mobile radio communication device (12) as claimed in any one of Claims 1 to 6 and a mobile radio communications network device (14) as claimed in Claim 8.

## Patentansprüche

1. Mobilfunkkommunikationsvorrichtung (12) zur Kommunikation mit einem Mobilfunkkommunikationsnetzwerk, wobei das Mobilfunkkommunikationsnetzwerk einen Evolved-Node-B (14) aufweist, wobei die Vorrichtung (12) dazu ausgelegt ist, wenigstens eine Anwendung, die zur Datenübertragung einen Netzwerkzugriff benötigt, und den Netzwerkzugriff, der ein Small-Data-Transmission-, SDT-, Merkmal aufweist, zu betreiben, wobei die Mobilfunkkommunikationsvorrichtung (12) weiterhin dazu ausgelegt ist:
vom dem Evolved-Node-B (14) ein Radio-Resource-Control-, RRC-, Verbindungsneukonfigurationssignal (32) zu empfangen, das eine Attach-Accept-Nachricht aufweist, wobei die Attach-Accept-Nachricht Referenzanwendungsinformationen aufweist, und wobei die Referenzanwendungsinformationen eine Liste von zulässigen Anwendungen für SDT oder eine Liste vom gesperrten Anwendungen für SDT aufweisen;
mittels der Referenzanwendungsinformationen zu bestimmen, ob eine erste Anwendung, die in der Vorrichtung (12) gespeichert ist und versucht, das SDT-Merkmal zu verwenden, das Small-Data-Transmission-Merkmal für die Datenübertragung davon nutzen kann; und
bei der Bestimmung, dass die erste Anwendung das SDT-Merkmal nutzen kann, das SDT-Merkmal zum Übertragen von Daten der ersten Anwendung an den Evolved-Node-B (14) zu verwenden.

2. Mobilfunkkommunikationsvorrichtung (12) nach Anspruch 1 und dazu ausgelegt, zu bestimmen, ob die Datenübertragung die Small-Data-Transmission-Kriterien erfüllt.

3. Mobilfunkkommunikationsrichtung (12) nach Anspruch 2 und dergestalt ausgelegt, dass in einer Anwendungsschicht oder in einem Protokollstapel der Vorrichtung bestimmt wird, ob die erforderliche Übertragung das Small-Data-Transmission-Kriterium erfüllt.

4. Mobilfunkkommunikationsvorrichtung (12) nach einem der Ansprüche 1 bis 3, wobei die Referenzanwendungsinformationen eine Identifizierung derjenigen Anwendungen erlaubt, die das Small-Data-Transmission-Merkmal nutzen können.

5. Mobilfunkkommunikationsvorrichtung (12) nach einem der Ansprüche 1 bis 4, wobei die Referenzanwendungsinformationen eine Identifizierung derjenigen Anwendungen erlaubt, die für das Verwenden des Small-Data-Transmission-Merkmals gesperrt sind.

6. Mobilfunkkommunikationsvorrichtung (12) nach einem der Ansprüche 1 bis 5 und dergestalt ausgelegt, dass wenn durch Bezugnahme auf die Referenzanwendungsinformationen bestimmt wird, dass das Small-Data-Transmission-Merkmal nicht genutzt werden kann, eine alternative Paketübertragungsprozedur eingesetzt wird.

7. Von einer Mobilfunkkommunikationsvorrichtung (12) durchgeführtes Verfahren zur Kommunikation mit einem Mobilfunkkommunikationsnetzwerk, wobei das Mobilfunkkommunikationsnetzwerk einen Evolved-Node-B (14) aufweist, wobei die Vorrichtung (12) dazu ausgelegt ist, wenigstens eine Anwendung, die zur Datenübertragung einen Netzwerkzugriff benötigt, und den Netzwerkzugriff, der ein Small-Data-Transmission-, SDT-, Merkmal aufweist, zu betreiben, wobei das Verfahren die folgenden Schritte aufweist:
Empfangen (32) vom dem Evolved-Node-B (14) eines Radio-Resource-Control-, RRC-, Verbindungsneukonfigurationssignals (32), das eine Attach-Accept-Nachricht aufweist, wobei die Attach-Accept-Nachricht Referenzanwendungsinformationen aufweist, und wobei die Referenzanwendungsinformationen eine Liste von zulässigen Anwendungen für SDT oder eine Liste vom gesperrten Anwendungen für SDT aufweisen;
Bestimmen mittels der Referenzanwendungsinformationen, ob eine erste Anwendung, die in der Vorrichtung (12) gespeichert ist und versucht, das SDT-Merkmal zu verwenden, das Small-Data-Transmission-Merkmal für die Datenübertragung davon nutzen kann; und
Verwenden bei der Bestimmung, dass die erste Anwendung das SDT-Merkmal nutzen kann, des SDT-Merkmals zum Übertragen von Daten der ersten Anwendung an den Evolved-Node-B (14).

8. Erste Mobilfunkkommunikations-Netzwerkvorrichtung, die zur Kommunikation mit einer zweiten Mobilfunkkommunikationsvorrichtung (12) ausgelegt ist, wobei die erste Vorrichtung ein Evolved-Node-B (14) ist, die zweite Vorrichtung (12) in einem Mobilfunkkommunikationsnetzwerk betrieben wird und dazu ausgelegt ist, wenigstens eine Anwendung, die zur Datenübertragung einen Netzwerkzugriff benötigt, wobei der Netzwerkzugriff ein Small-Data-Transmission-, SDT-, Merkmal aufweist, zu betreiben, wobei die Mobilfunkkommunikationsvorrichtung (14) weiterhin dazu ausgelegt ist:
von einer Mobilitätsmanagement-Entität (16), MME, eine Kontext-Setup-Anforderung zu empfangen, die eine Attach-Accept-Nachricht aufweist, wobei die Attach-Accept-Nachricht Referenzanwendungsinformationen aufweist, mittels derer die zweite Vorrichtung (12) bestimmen kann, ob eine Anwendung, die um einen Netzwerkzugriff ersucht, das Small-Data-Transmission-Merkmal für die Datenübertragung davon nutzen kann, und wobei die Referenzanwendungsinformationen eine Liste von zulässigen Anwendungen für SDT oder eine Liste von gesperrten Anwendungen für SDT aufweist; und
der zweiten Vorrichtung (12) ein Radio-Resource-Control-, RRC-, Verbindungsneukonfigurationssignal (32) zu liefern, das die Attach-Accept-Nachricht aufweist.

9. Verfahren, das von einer ersten Mobilfunkkommunikations-Netzwerkvorrichtung durchgeführt wird, die ausgelegt ist, um mit einer zweiten Mobilfunkkommunikationsvorrichtung (12) zu kommunizieren, wobei die erste Vorrichtung ein Evolved-Node-B (14) ist, die zweite Vorrichtung (12) in einem Mobilfunkkommunikationsnetzwerk betrieben wird und dazu ausgelegt ist, wenigstens eine Anwendung, die zur Datenübertragung einen Netzwerkzugriff benötigt, zu betreiben, wobei ein solcher Netzwerkzugriff ein Small-Data-Transmission-, SDT-, Merkmal aufweist, wobei das das Verfahren die folgenden Schritte aufweist:
Empfangen von einer Mobilitätsmanagement-Entität (16), MME, einer Kontext-Setup-Anforderung, die eine Attach-Accept-Nachricht aufweist, wobei die Attach-Accept-Nachricht Referenzanwendungsinformationen aufweist, mittels derer die zweite Vorrichtung (12) bestimmen kann, ob eine Anwendung, die um einen Netzwerkzugriff ersucht, das Small-Data-Transmission-Merkmal für die Datenübertragung davon nutzen kann, und wobei die Referenzanwendungsinformationen eine Liste von zulässigen Anwendungen für SDT oder eine Liste von gesperrten Anwendungen für SDT aufweisen; und
Liefern an die zweite Vorrichtung (12) eines Radio-Resource-Control-, RRC-, Verbindungsneukonfigurationssignal (32), das die Attach-Accept-Nachricht aufweist.

10. Kommunikationssystem, das eine Mobilfunkkommunikationsvorrichtung (12) nach einem der Ansprüche 1 bis 6 und eine Mobilfunkkommunikations-Netzwerkvorrichtung (14) nach Anspruch 8 aufweist.

## Revendications

1. Dispositif de radiocommunication mobile (12) pour communiquer dans un réseau de radiocommunication mobile, le réseau de radiocommunication mobile comprenant un noeud B évolué (14), le dispositif (12) étant agencé pour faire fonctionner au moins une application demandant un accès au réseau pour la transmission de données et l'accès au réseau incluant une fonction de petite transmission de données, SDT, le dispositif de radiocommunication mobile (12) étant agencé en outre pour :
recevoir, à partir du noeud B évolué (14), un signal de reconfiguration de connexion de commande de ressources radio, RRC, (32) comprenant un message d'acceptation de rattachement, dans lequel le message d'acceptation de rattachement comprend des informations d'application de référence, et dans lequel les informations d'application de référence comprennent une liste d'applications habilitées à la SDT ou une liste d'applications interdites de SDT ;
déterminer, au moyen des informations d'application de référence, si une première application stockée dans le dispositif (12) et recherchant l'utilisation de la fonction SDT peut employer la fonction de petite transmission de données pour sa transmission de données ; et
utiliser, lors de la détermination que la première application peut employer la fonction SDT, la fonction SDT pour la transmission de données de la première application au noeud B évolué (14).

2. Dispositif de radiocommunication mobile (12) selon la revendication 1 et agencé pour déterminer si la transmission de données satisfait des critères de petite transmission de données.

3. Dispositif de radiocommunication mobile (12) selon la revendication 2 et agencé de manière qu'il soit déterminé dans une couche d'applications ou dans une pile de protocoles du dispositif si la transmission demandée satisfait des critères de petite transmission de données.

4. Dispositif de radiocommunication mobile (12) selon l'une quelconque des revendications 1 à 3, dans lequel les informations d'application de référence permettent une identification des applications qui peuvent employer la fonction de petite transmission de données.

5. Dispositif de radiocommunication mobile (12) selon l'une quelconque des revendications 1 à 4, dans lequel les informations d'application de référence permettent une identification des applications qui sont interdites d'utilisation de la fonction de petite transmission de données.

6. Dispositif de radiocommunication mobile (12) selon l'une quelconque des revendications 1 à 5, et agencé de manière que, si, en référence aux informations d'application de référence, il est déterminé que la fonction de petite transmission de données ne peut pas être employée, alors une procédure de transmission par paquets de secours soit employée.

7. Procédé effectué par un dispositif de radiocommunication mobile (12) pour communiquer dans un réseau de radiocommunication mobile, le réseau de radiocommunication mobile comprenant un noeud B évolué (14), le dispositif (12) étant agencé pour faire fonctionner au moins une application demandant un accès au réseau pour la transmission de données et l'accès au réseau incluant une fonction de petite transmission de données, SDT, le procédé comprenant les étapes de :
réception (32), à partir du noeud B évolué (14), d'un signal de reconfiguration de connexion de commande de ressources radio, RRC, (32) comprenant un message d'acceptation de rattachement, dans lequel le message d'acceptation de rattachement comprend des informations d'application de référence, et dans lequel les informations d'application de référence comprennent une liste d'applications habilitées à la SDT ou une liste d'applications interdites de SDT ;
détermination, au moyen des informations d'application de référence reçues, si une première application stockée dans le dispositif (12) et recherchant l'utilisation de la fonction SDT peut employer la fonction de petite transmission de données pour sa transmission de données ; et
utilisation, lors de la détermination que la première application peut employer la fonction SDT, de la fonction SDT pour la transmission de données de la première application au noeud B évolué (14).

8. Premier dispositif de réseau de radiocommunication mobile agencé pour la communication avec un deuxième dispositif de radiocommunication mobile (12), ledit premier dispositif étant un noeud B évolué (14), le deuxième dispositif (12) fonctionnant dans un réseau de radiocommunication mobile et étant agencé pour faire fonctionner au moins une application demandant un accès au réseau pour la transmission de données, l'accès au réseau incluant une fonction de petite transmission de données, SDT, le dispositif de réseau de radiocommunication mobile (14) étant agencé en outre pour :
recevoir, à partir d'une entité de gestion de mobilité (16), MME, une demande de configuration de contexte comprenant un message d'acceptation de rattachement, dans lequel le message d'acceptation de rattachement comprend des informations d'application de référence au moyen desquelles ledit deuxième dispositif (12) peut déterminer si une application recherchant un accès au réseau peut employer la fonction de petite transmission de données pour sa transmission de données, et dans lequel les informations d'application de référence comprennent une liste d'applications habilitées à la SDT ou une liste d'applications interdites de SDT; et
délivrer, au deuxième dispositif (12), un signal de reconfiguration de connexion de commande de ressources radio, RRC, (32) comprenant le message d'acceptation de rattachement.

9. Procédé effectué par un premier dispositif de réseau de radiocommunication mobile agencé pour communiquer avec un deuxième dispositif de radiocommunication mobile (12), ledit premier dispositif étant un noeud B évolué (14), ledit deuxième dispositif (12) fonctionnant dans un réseau de radiocommunication mobile et étant agencé pour faire fonctionner au moins une application demandant un accès au réseau pour la transmission de données, cet accès au réseau incluant une fonction de petite transmission de données, SDT, le procédé comprenant les étapes de :
réception, à partir d'une entité de gestion de mobilité (16), MME, d'une demande de configuration de contexte comprenant un message d'acceptation de rattachement, dans lequel le message d'acceptation de rattachement comprend des informations d'application de référence au moyen desquelles ledit deuxième dispositif (12) peut déterminer si une application recherchant un accès au réseau peut employer la fonction de petite transmission de données pour sa transmission de données, et dans lequel les informations d'application de référence comprennent une liste d'applications habilitées à la SDT ou une liste d'applications interdites de SDT; et
fourniture, au deuxième dispositif (12), d'un signal de reconfiguration de connexion de commande de ressources radio, RRC, (32) comprenant le message d'acceptation de rattachement.

10. Système de communication comprenant un dispositif de radiocommunication mobile (12) selon l'une quelconque des revendications 1 à 6 et un dispositif de réseau de radiocommunication mobile (14) selon la revendication 8.
